(19) Europäisches Patentamt
European Patent Office
Office européen des brevets

(11) **EP 2 098 564 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(51) Int Cl.:
***C08K 5/17*** (2006.01)      ***C08K 5/20*** (2006.01)
***C08L 21/00*** (2006.01)      ***B60C 1/00*** (2006.01)

(21) Anmeldenummer: **09152755.6**

(22) Anmeldetag: **13.02.2009**

(54) **Kautschukmischung und daraus hergestellte Reifen**

Natural rubber composition and tyres made from same

Composotion de caoutchouc et pneu ainsi fabriqué

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **08.03.2008 DE 102008013265**

(43) Veröffentlichungstag der Anmeldung:
**09.09.2009 Patentblatt 2009/37**

(73) Patentinhaber: **Continental Reifen Deutschland GmbH**
**30165 Hannover (DE)**

(72) Erfinder:
• **Wagemann, Jürgen**
**31162, Bad Salzdetfurth (DE)**
• **Weinreich, Hajo**
**31840, Hessisch Oldendorf (DE)**

(74) Vertreter: **Continental Corporation**
**c/o Continental AG**
**Intellectual Property**
**Postfach 169**
**30001 Hannover (DE)**

(56) Entgegenhaltungen:
**DE-A1-102004 005 132      US-A1- 2002 177 641**
**US-A1- 2003 135 006      US-B1- 6 590 017**

• **None**

## Beschreibung

Die vorliegende Erfindung betrifft vernetzbare Kautschukmischungen, wie in Anspruch 1 beschrieben, insbesondere für Reifen und Laufstreifen von Reifen, enthaltend zumindest 80 bis 100 phr funktionalisierten SSBR- und/oder ESBR-Dienkautschuk, gegebenenfalls einen oder mehrere weitere polare oder unpolare Kautschuke, mindestens einen polaren Füllstoff und Verbindungen von Aminosäuren und Fettsäuren, Aminofettsäuren, Fettsäureamiden und/oder Aminosäurederivaten. Die Erfindung stellt weiterhin Laufstreifen und Reifen, insbesondere Luftreifen bereit, diese vulkanisierten Kautschukmischungen zumindest teilweise enthaltend. Schließlich richtet sich die vorliegende Erfindung auf technische Gummiartikel, die zumindest zum Teil aus der vulkanisierten Kautschukmischung bestehen.

## Technischer Hintergrund

Seit einiger Zeit werden in der Reifenindustrie Styrol-Butadien-Kautschuke (SBR) im großen Umfang eingesetzt. Insbesondere seit Einführung der Silika-Technologie findet eine verstärkte Verwendung von SBR in Reifen, insbesondere den Laufstreifen statt. Diese Styrol-Butadien-Kautschuke können z.B. als lösungspolymerisierte Styrol-Butadien-Kautschuke (SSBR) oder emulsionspolymerisierte Styrol-Butadien-Kautschuke (ESBR) eingesetzt werden. Gerade der Einsatz von SSBR in Reifen und insbesondere den Laufstreifen ist in der Reifenindustrie weit verbreitet.

Aktuell werden SSBR in Mengen von kleiner 55 phr in Kombination mit Silika als Füllstoffe in Winterreifen eingesetzt, in Sommerreifen, wo ein verbessertes Trockenbremsen und Handling gewünscht ist, finden SSBR mit Gehalten von 50 bis 80 phr Anwendung.

US 2002/177641 offenbart eine Kautschukmischung für Reifen enthaltend 80phr SBR, 20phr BR, Silika, Stearinsäureamid oder Propionsäureamid. Allerdings ist der Einsatz der SSBRs bzw. ESBRs limitiert, da mit hohen SSBR- oder ESBR-Gehalten die dynamische Steifigkeit der vulkanisierten Kautschukmischungen, z.B. in Laufstreifen zunimmt. Durch hohe SBR-Gehalte wird eine Verbesserung der Hochtemperaturrelevanten Eigenschaften, wie Trockenbremsen oder Handling erzielt. Allerdings verringert sich bei hohen Mengen an SSBR oder ESBR die Tieftemperaturflexibilität. Dieses führt zu einer Verschlechterung verschiedenster Eigenschaften, wie Rollwiderstand und Abrieb, sowie ein schlechtes Verarbeitungsverhalten.

Auch der Einsatz von Siliziumoxid-basierten Füllstoffen, wie Silika und Kieselsäure, der allgemein zu einem höheren Niveau der vorgenannten Eigenschaften geführt hat, konnte die bestehenden Probleme insbesondere in der Verarbeitbarkeit von Kautschukmischungen mit hohen SBR-Gehalten nicht überwinden.

Dem Fachmann ist bekannt, dass Laufstreifen-Silika-Mischungen um so schwieriger zu verarbeiten sind, desto größer der Synthese-Kautschuk-Anteil also der SBR oder High-Vinyl-BR-Anteil in der Rezeptur ist. Üblicherweise beginnen die Verarbeitungsschwierigkeiten bei einem SBR-Gehalt größer 50 phr. Diese Mischungen sind schwieriger zu verarbeiten, da zum einen die Grünfestigkeit signifikant abnimmt bzw. die Rissempfindlichkeit der unvulkanisierten Mischung zunimmt. Andererseits nimmt die grüne Klebrigkeit, insbesondere die Klebrigkeit zu den Verarbeitungsmaschinen zu.

Zur Überwindung dieser Verarbeitungsprobleme wurden bereits verschiedene Möglichkeiten untersucht. So werden solche Mischungen zur Verbesserung des Verarbeitungsverhaltens Zink-Seifen oder Gemische von Zink-Seifen und Fettsäureestern hinzugefügt.

Allerdings zeigen diese zugegebenen Stoffe, wie Zink-Seife oder Zink-Seife und Fettsäureester bei Kautschukmischungen mit hohen SBR-Anteilen, insbesondere SBR-Anteilen von größer 80 phr, nicht die gewünschten Verbesserungen bei der Verarbeitbarkeit der Kautschukmischungen.

Des Weiteren ist bekannt, SSBRs bzw. ESBRs zu funktionalisieren. So beschreibt die EP 763 564 Epoxidierungen von entsprechenden Copolymeren. Entsprechende Verfahren zu Epoxidierungen sind aus dem Stand der Technik bekannt. Eine Funktionalisierung von SSBRs führt zu positiven Veränderungen im Rollwiderstands- und Abriebsverhalten, siehe auch EP 1 270 657.

Diese polymeren Modifikationen, die unter anderem mit dem Ziel erfolgt, den Füllstoff besser mit dem Polymer zu verbinden, lässt den Dämpfungsbeitrag der Mischung bei höheren Temperaturen erniedrigen, d.h. z.B. der Wert des Rebounds bei 70 °C wird erhöht. Dieser Wert stellt einen üblichen Indikator für einen verbesserten Rollwiderstand dar.

Es besteht nach wie vor ein großes Bedürfnis, SBRs in hohen Anteilen in Kautschukmischungen zu verwenden, ohne dass die Verarbeitbarkeit dieser Kautschukmischungen verschlechtert wird. Die EP 1 270 657 führt dazu aus, dass bei hohen Gehalten an SBR sich bei den Vulkanisaten eine schlechte Reiß- und Kerbfestigkeit ergibt, des Weiteren gab es Probleme bei der Vulkanisation.

Der technische Widerspruch, wie er aus dem Stand der Technik bekannt ist, besteht nun darin, dass zwar einerseits die Maßnahme der Polymermodifikation von SBRs den Rollwiderstand der Mischung verbessert, aber andererseits sowohl die Polymermodifikationen, d.h. die Funktionalisierung, wie auch die Maßnahmen der Erhöhung des SBR-Anteils in der Mischung zu einem deutlich schlechteren Verarbeitungsverhalten führen.

Der vorliegenden Erfindung liegt nun die Aufgabe zugrunde, Kautschukmischungen für insbesondere Laufstreifen von Reifen und Reifen bereitzustellen, die den hohen Anforderungen hinsichtlich ihrer Eigenschaften Nassgriff, Wintereigenschaften, Abrieb und Rollwiderstand genügen, also einen hohen SBR-Gehalt aufzeigen, allerdings die damit verbundenen Nachteile bei der Verarbeitbarkeit überwinden.

Gelöst wird die Aufgabe erfindungsgemäß dadurch, dass die Kautschukmischung, wie in Anspruch 1 beschrieben, zumindest 80 bis 100 phr funktionalisierten SSBR- und/oder ESBR-Dienkautschuk, 0 bis 20 phr weiteren polaren oder unpolaren Kautschuk, zumindest einen polaren Füllstoff und mindestens 0,1 phr Aminofettsäuren, Fettsäureamiden, Aminosäurederivate und/oder Verbindungen von Aminosäure und Fettsäure enthält.

Die Verbesserung des Rollwiderstands einer vernetzbaren Kautschukmischung, insbesondere geeignet für Laufstreifen, konte durch Einsatz hoher Anteile eines polar-reaktiv modifizierten SSBRs/ESBRs erreicht werden, gleichzeitig erlaubt die Zumischung der Aminofettsäuren, Fettsäureamide, Aminosäurederivate und/oder Verbindungen von Aminosäuren und Fettsäuren als Prozesshilfen eine verbesserte Verarbeitbarkeit und eine Verbesserung der Grünfestigkeit. Dadurch kann der Prozess zur Herstellung von Reifen und Laufstreifen unter Verwendung der vernetzbaren Kautschukmischungen wesentlich verbessert werden.

Diese Kautschukmischungen zeigen auch eine Verbesserung des Abriebverhaltens auf. Zur Darstellung dieses Merkmals, das Abriebverhalten der Mischung, wird vorliegend der Parameter "bound rubber" verwendet. Dieser soll den Effekt der Polymermodifikation darstellen. Bekanntermaßen trägt eine Erhöhung des Anteils am "bound rubber" zur Verbesserung des Abriebverhaltens einer Mischung bei. Eine solche Erhöhung des "bound rubber" führt allerdings auch zu einer Verringerung der Grünfestigkeit der Mischung und stellt somit ein weiteres Problem bei der Verarbeitung dar. Dieses Problem wird erfindungsgemäß gelöst durch Hinzufügen von Aminofettsäuren, Fettsäureamiden, Aminosäurederivaten und/oder Verbindungen von Aminosäuren und Fettsäuren.

Erfindungsgemäße vernetzbare Kautschukmischungen erlauben eine Erhöhung des "bound rubber" und damit des Abriebverhaltens bei überraschenderweise gleichzeitiger Verbesserung des Verarbeitungsverhaltens, wie z.B. die Grünfestigkeit der Mischung.

Die Kombination an hohen Gehalten von funktionalisierten SBR-Kautschuken mit einem polaren Füllstoff und den Prozessadditiven Aminofettsäuren, Fettsäureamide, Aminosäurederivate und/oder Verbindungen von Aminosäuren und Fettsäuren, löst den oben beschriebenen Zielkonflikt der Erhöhung des "bound rubber" und damit der Verbesserung des Abriebs unter Beibehaltung einer guten Verarbeitbarkeit im Herstellungsprozess.

Es zeigte sich nun überraschend, dass nur bei der Kombination von funktionalisiertem SBR, insbesondere SSBR und/oder ESBR-Dienkautschuk, bevorzugt polare bzw. polar-reaktiv modifiziert, mit den genannten Additiven, die genannten Ziele erreicht werden.

Bevorzugt handelt es sich bei dem Prozessadditiv um solche von Aminofettsäuren, Fettsäureamiden, Aminosäurederivaten und/oder Verbindungen von Aminosäuren und Fettsäuren, die eine Wirkung eines anionischen Tensids aufzeigen.

Bevorzugt ist dabei das Prozessadditiv, das erfindungsgemäß in der Kautschukmischung vorhanden ist, ein Fettsäure-basiertes Gemisch frei von Metallen. Die Hauptkomponente ist dabei bevorzugt ein anionisches Tensid mit einer hydrophoben Kohlenstoffkette, die von einer Fettsäure stammt und einer hydrophilen Kopfgruppe auf Basis einer Aminosäure.

Durch Verwendung des anionischen Tensids ist es möglich, die Verteilung bzw. Dispersion der Kieselsäure zu verbessern, indem z.B. die Kieselsäure bzw. der auf Siliziumoxid basierte Füllstoff stärker hydrophobiert wird. Dadurch treten verringerte Füllstoff-Füllstoff-Wechselwirkungen, der sogenannte Payne-Effekt, auf. Dieses erlaubt nicht nur den Rollwiderstand zu verbessern, sondern erlaubt auch bei der Extrusion eine glatte Oberfläche zu erhalten. Es wird angenommen, dass die Verringerung der Klebrigkeit in den erfindungsgemäßen Mischungen aufgrund von einem erhöhten Sättigungsgrad der verwendeten Fettsäuren bzw. einer verbesserten Löslichkeit in der Kautschukmatrix begründet ist.

In einer besonders bevorzugten Form handelt es sich bei dem Additiv um Struktol-HT254 (Handelsname) von Schill+Seilacher, Hamburg, Deutschland. Dieses metallfreie Gemisch aus Fettsäureamiden und Aminosäurederivaten erlaubt einer Verringerung der Klebrigkeit und damit eine Verbesserung der Verarbeitbarkeit gerade von Kautschukmischungen mit hohen Anteilen an SBR.

Bevorzugt wird das Prozessadditiv in Mengen von mindestens 0,1 phr, wie in Anteilen von 0,1 bis 15 phr, der Kautschukmischung hinzugefügt.

Diese Kombination an hohen Anteilen von polar-reaktiven modifiziertem SBR und dem genannten Prozessadditiv erlaubt eine Erhöhung des "bound rubber" und somit eine Verbesserung des Rollwiderstandes und des Abriebverhaltens. Gleichzeitig wird die Grünfestigkeit der Mischung so erhöht, dass eine Verarbeitung der Mischung möglich ist.

Der polare Füllstoff, wie ein auf Siliziumoxid basierender Füllstoff, z.B. Kieselsäure und Silika, weist eine minimal Gesamt-Silika-Oberfläche, definiert über das Produkt aus Mengenanteilen (phr) und CTAB-Silika-Oberfläche ($m^2$/g), der in der Mischung erforderlich ist, von größer 10000 $m^2$ auf.

Die Funktionalisierung der SBRs, sowohl SSBR als auch ESBR, hat einen positiven Einfluss auf das Rollwiderstand- und Abriebverhalten. Des Weiteren ermöglicht die Funktionalisierung aber auch den bisher auf die Winterperformance negativen Einfluss von hohen SBR-Gehalten, zu reduzieren bzw. sogar diese Eigenschaften zu verbessern.

In einem weiteren Aspekt betrifft die vorliegende Erfindung somit Laufstreifen für Reifen enthaltend zumindest zum Teil eine erfindungsgemäße vulkanisierte Kautschukmischung sowie entsprechende Reifen aus zumindest teilweise erfindungsgemäßer vulkanisierter Kautschukmischung.

Die in einem weiteren Aspekt bereitgestellten Laufstreifen enthaltend zumindest zum Teil eine erfindungsgemäße vulkanisierte Kautschukmischung bzw. Reifen, der zumindest zum Teil aus einer erfindungsgemäßen vulkanisierten Kautschukmischung besteht, sind insbesondere als Winterreifen oder Ganzjahresreifen geeignet.

Die erfindungsgemäße Kautschukmischung ist dabei nicht nur in Laufstreifen, sondern auch im Körper der Reifen einsetzbar. Schließlich richtet sich in einer weiteren Ausführungsform die vorliegende Erfindung auf andere technische Gummiartikel, wie Gurte und Riemen, insbesondere Zahnriemen, Keilriemen, Zahnrückriemen, Flachriemen und Fördergurte und bei den genannten Artikeln insbesondere die Laufseiten davon, die zumindest zum Teil eine erfindungsgemäße vulkanisierte Kautschukmischung enthalten. Diese weiteren technischen Gummiartikel zeigen sich ebenfalls durch eine gute Stabilität bei hoher Temperatur aber auch eine hervorragende Tiefentemperaturflexibilität aus.

In einer bevorzugten Ausführungsform weisen die SSBR oder ESBR einen Styrolanteil von 10 bis 50 Gew.-%, bevorzugt 15 bis 40 Gew.-% auf und/oder einen Vinylgehalt von 10 bis 80 Gew.-% jeweils bezogen auf das gesamte Polymer. Solche lösungspolymerisierten Styrol-Butadien-Kautschuke können z.B. unter Verwendung von Lithiumalkylen in organischem Lösungsmittel hergestellt werden. Die SSBR oder ESBR können neben der polarfunktionalisierten Modifikation auch end-gekoppelt und in Gruppen modifiziert sein. Die e-mulsionspolymerisierten Styrol-Butadien-Kautschuke können ebenfalls nach bekannten Verfahren hergestellt werden. Es können die aus dem Stand der Technik bekannten Typen, die durch Copolymerisation von Styrol und 1,3-Butadien in wässriger Emulsion erhalten werden, verwendet werden. In einer bevorzugten Ausführungsform werden Mischungen aus ESBR und SSBR eingesetzt.

Alternativ kann die erfindungsgemäße Kautschukmischung auch eine Kautschukmischung aus 80 bis 100 phr funktionalisierten Hoch-Vinyl BR mit einem Vinylanteil von 40 bis 85 Gew.-%, 0 bis 20 phr mindestens eines weiteren Kautschuks und zumindest einem polarem Füllstoff sein. Auch bei funktionalisiertem Hoch-Vinyl BR, die einen ähnlichen Glasübergangspunkt aufweisen, wie SSBR, treten die für SSBR beschriebenen Nachteile auf.

Der in der Kautschukmischung weiterhin vorhandene Kautschuk ist ein üblicher polarer und unpolarer Kautschuk. D.h. die vulkanisierbare Kautschukmischung kann als weitere polare oder unpolare Kautschukkomponente alle dem Fachmann bekannten Kautschuktypen enthalten, wie z.B. Naturkautschuk, synthetisches Polyisopren, Polybutadien, Butylkautschuk, Ethylen-Propylen-Dienkautschuk, Ethylen-Propylen-Dienkautschuk, Halobutylkautschuk, Chloroprenkautschuk, Isopren-Butadien-Kautschuk und/oder Styrol-Isopren-Butadien-Terpolymer, aber auch solche mit polaren Gruppen, wie z.B. Acrylnitril-Butadien-Kautschuk, hydrierter Acrylnitril-Butadien-Kautschuk, hydrierter Acrylnitril-Butadien-Kautschuk mit Seitengruppen für verbesserte Kälteflexibilität, carboxylierter Acrylnitril-Butadien-Kautschuke, Styrol-Butadien-Copolymere und Propfpolymer mit weiteren ungesättigten polaren Monomeren, Silikonkautschuk, Ethylen-Vinylacetat-Kautschuk, Ethylen-Acryl-Elastomere, Kautschuke mit Halogenatom, wie Fluorkautschuk, Epichlohydrinkautschuk, alkyliertes chlorsulfoniertes Polyethylen, chlorsulfoniertes Polyethylen, chloriertes Polyethylen usw.

In einer bevorzugten Ausführungsform sind die weiteren Kautschuke Naturkautschuke (NR), synthetisches Polyisopren (ER), Polybutadien (BR), Propylen-Ethylen-Kautschuk (PE), Ethylen-Propylen-Dien-Kautschuk (EPDM), Halobutylkautschuk (HBR), Chloroprenkautschuk (CR), Isopren-Butadien-Kautschuk (IBR) und/oder Styro-Isopren-Butadien-Terpolymer.

Erfindungsgemäß weisen die SSBR und ESBR Dienkautschuke Funktionalisierungen auf. Diese Funktionalisierungen sind solche mit einer polaren oder polar-reaktiven Gruppe. Es handelt sich bei den Funktionalisierungen um Funktionalisierungen mit Hydroxylgruppen und/oder Epoxidgruppen und/oder Siloxangruppen und/oder Aminogruppen und/oder Aminosiloxangruppen und/oder Carboxylgruppen und/oder Phthalocyanin.

Die Funktionalisierungen können sowohl am Kettenende als auch in der Kette vorliegen.

Zum Beispiel kann eine Funktionalisierung mittels eines funktionalisierten Starters und/oder Kettenabbruch eingebracht werden. Geeignete Verfahren und Gruppen sind aus dem Stand der Technik bekannt. Die Funktionalisierung kann die hohe Bindungskraft zwischen Kautschuk und Füllstoff verbessern.

Wie ausgeführt können die SSBR und/oder ESBR in Anteil von 80 bis 100 phr vorliegen, während die weiteren polaren oder unpolaren Kautschuke in Mengen von 0 bis 20 phr in der Kautschukmischung vorhanden sind.

Die in dieser Schrift verwendete Angabe phr (Gewichtsteile, bezogen auf 100 Gewichtsteil der gesamten Kautschuke in der Mischung, parts per hundred parts rubber by weight) ist die in der Kautschukindustrie übliche Mengenangabe für Mischungsrezepturen. Diese Dosierung der Gewichtsteile der einzelnen Substanzen wird dabei stets auf 100 Gewichtsteile der gesamten Masse aller in der Mischung vorhandenen Kautschuke bezogen.

Sowohl SSBR und ESBR als auch die weiteren polaren und unpolaren Kautschuke können auch als Mischungen vorliegen.

Weiterhin enthält die Kautschukmischung einen polaren Füllstoff.

Als polarer Füllstoff wird Kieselsäure verwendet, geeignete siliziumbasierte Füllstoffe, insbesondere Kieselsäuren sind im Stand der Technik bekannt.

Bevorzugt werden die polaren Füllstoffe in einer Menge von 0,1 phr bis 160 phr eingesetzt. Erfindungsgemäß können aber auch weitere Füllstoffe, wie insbesondere Ruß eingesetzt werden. Ruß wird dabei bevorzugt in einer Menge von 0,1 phr bis 80 phr eingesetzt. Die verwendeten Ruße sind Ruße, wie sie allgemein in Kautschukmischungen eingesetzt werden. Bevorzugt weisen die Ruße dabei die folgenden Charakteristika auf: DBP-Zahl (gemäß ASTM D2414) 90 bis 200 ml/100 g, CTAB-Oberfläche (gemäß ASTM D3765) 80 bis 170 m$^2$ und Iodabsorptionszahl (gemäß ASTM D1510) 10 bis 250 g/kg.

Bevorzugte Kieselsäuren sind fein verteilte, gefällte Kieselsäuren, die z.B. eine Stickstoffoberfläche (BET-Oberfläche) (gemäß DIN 66131 und 66132) von 35 bis 350 m$^2$, vorzugsweise von 115 bis 230 m$^2$ und eine CTAB-Oberfläche (gemäß ASTM D3765) von 30 bis 350 m$^2$, vorzugsweise von 120 bis 285 m$^2$ aufweisen.

Derartige Kieselsäuren führen z.B. in Kautschukmischungen für Reifenlaufstreifen zu besonders guten physikalischen Eigenschaften der Vulkanisate. Als Kieselsäuren können somit z.B. sowohl jene des Typs VN3 (Handelsname) der Firma Degussa als auch hochdispergierte Kieselsäuren sogenannte HD-Kieselsäuren (z.B. Ultrasil 7000 der Firma Degussa), zum Einsatz kommen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruss (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden.

Die Kupplungsagenzien, bevorzugt Silan-Kupplungsreagenzien, werden in Mengen von 0,2 bis 30 phr, vorzugsweise 2 bis 20 phr, eingesetzt, da dann eine optimale Anbindung des Füllstoffes an den oder die Kautschuke erfolgen kann. Alternativ kann die Menge an Kupplungsreagenzien auf die Menge an Füllmittel in der Mischung bezogen werden (phf, parts per hundred parts filler by weight). Hierbei liegt die bevorzugte Menge an Kupplungsreagenz, insbesondere an Silan-Kupplungsreagenz bei 5 bis 15 phf.

Die Kautschukmischung kann außerdem noch andere Füllstoffe, wie beispielsweise Aluminosilicate, Kreide, Stärke, Magnesiumoxid, Titandioxid oder Kautschukgele enthalten.

Bevorzugt wird als Weichmacher Mineralöl eingesetzt, alternativ können aber auch flüssige Polymere verwendet werden, die sich als Ersatzstoffe für Mineralöle als Weichmacher eignen. Die Weichmacher, bevorzugt Mineralöle, werden in Menge von 1 bis 160 phr, wie 5 bis 75 phr, insbesondere 10 bis 60 phr eingesetzt. Die flüssigen Polymere, wie z.B. flüssiges Polybutadien, weisen entsprechend Mengen von 0 bis 160 phr, wenigstens aber 0,1 phr, wie 5 bis 75 phr, insbesondere 10 bis 60 phr auf.

Die Kautschukmischung kann außer den genannten Substanzen noch andere Zusatzstoffe, wie z. B. MES (mild extraction solvate), RAE (residual aromatic extract) oder TDAE (treated distillate aromatic extract) oder Rapsöl aufweisen.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind.

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung andere vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Des Weiteren liegen in der Kautschukmischung übliche Aktivatoren vor. Diese Aktivatoren können Zinkoxid und Fettsäuren oder Zinkseifen auf Basis von Zinkoxid und Fettsäuren sein. Alternativ können Gemische aus Zinkoxid und Metallacrylat und/oder Metallmethacrylat eingesetzt werden. Diese werden bevorzugt in einer Menge von 0,1 bis 3,0 phr an Zinkoxid und in einer Menge von 0,1 bis 3,0 phr an Metallacrylat und/oder Metallmethacrylat eingesetzt.

Bei Verwendung von DPG sind insbesondere im Hinblick auf einem bei der Produktion unkritischen Vulkanisationsverhalten Mischungen vorteilhaft, deren Gehalt an DPG folgender ist:

(phr Silika x BET Silika)/phr DPG > 4500 und < 7500.

In einer bevorzugten Ausführungsform enthält die Kautschukmischung die folgende Zusammensetzung:

80 bis 100 phr funktionalisiertes SSBR und/oder ESBR
0 bis 20 phr weiterer polarer oder unpolarer Kautschuk
1 bis 200 phr Kieselsäure
0 bis 80 phr Ruß
1 bis 160 phr Weichmacher
0 bis 160 phr flüssige Polymer und
1 bis 30 phr Silan-Kupplungsagenz und mindestens

0,1 phr Aminofettsäuren, Fettsäureamide, Aminosäurederivate und/oder Verbindungen von Aminosäuren und Fettsäuren.

Die Herstellung der erfindungsgemäßen Kautschukmischung erfolgt auf herkömmliche Art und Weise in zwei Stufen, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird, z.B. mit einem ineinander geführten Innenmischer, und im Anschluss durch Zugabe des Vulkanisationssystems die Fertigmischung auf einem tangierenden Mischer erzeugt wird. Das spezielle Prozesshilfsmittel wird der Fertigmischung zugegeben.

Alternativ ist die Herstellung in 3 Stufen möglich, wobei das spezielle Prozesshilfsmittel in der 2. Stufe vor dem Fertigmischungsschritt eingemischt wird.

Anschließend wird die Mischung weiterverarbeitet, z.B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden. Die auf diese Weise mit der erfindungsgemäßen Mischung hergestellten Reifen zeigen gute Eigenschaften.

Der "bound rubber" wird verstanden als das an dem Füllstoff gebundene Polymer, welches unter den vorbestimmten Bedingungen nicht mit Cyclohexan extrahiert wird. Im Folgenden wird die Bestimmung des "bound rubber" näher erläutert.

Eine zu untersuchende Probe wird auf einem kalten Walzwerk dünn ausgerollt. Hieraus werden vier Prüfkörper mit 5 mm Durchmesser ausgestanzt oder geschnitten. Zwei Prüfkörper werden 16 h mit Aceton und 2 Prüfkörper 40 h mit Cyclohexan mit einer Extraktionsanlage nach Soxhlett extrahiert. Anschließend werden die Prüfkörper im Vakuumtrockenschrank 2 h bei 60 °C getrocknet.

Für alle Prüfkörper werden die Füllstoffgehalte mittels ThermoGravimetrischen Analyse (TGA) gemäß DIN 51006 und ASTM D 5443 bestimmt.

Anschließend wird der "bound rubber" wie folgt bestimmt:

$$\text{bound\_rubber } (\%) = \frac{\%org.Mat_{cyc} \times \%FS_{ace} \times 100}{\%org.Mat_{ace} \times FS_{cyc}}$$

$\%org.Mat_{cyc}$ = organischer Anteil TGA Cyclohexan-extrahierte Probe
$\%org.Mat_{ace}$ = organischer Anteil TGA Aceton-extrahierte Probe
$\%FS_{cyc}$ = Ruß + Asche TGA Cyclohexan-extrahierte Probe
$\%FS_{ace}$ = Ruß + Asche TGA Aceton-extrahierte Probe

Wie ausgeführt erlaubt der Parameter "bound rubber" eine Bestimmung des Abriebverhaltens einer Mischung.

Die Erfindung wird nun anhand von Vergleichs- und Ausführungsbeispielen, die in der Tabelle 1 zusammengefasst sind, näher erläutert, während Tabelle 2 die entsprechenden Prüfergebnisse darstellt.

**Tabelle 1**

|  | V1 | V2 | V3 | V4 | E1 | E2 |
|---|---|---|---|---|---|---|
| TSR | 5,0 | 5,0 | 5,0 | 5,0 | 5,0 | 5,0 |
| S-SBR[a] | 95,0 | - | 95,0 | - | 95,0 | - |
| polar-reaktiv mod. S-SBR[b] | - | 95,0 | - | 95,0 | - | 95,0 |
| Ruß, N 121 | 6,0 | 6,0 | 6,0 | 6,0 | 6,0 | 6,0 |
| Kieselsäure[c] | 95,0 | 95,0 | 95,0 | 95,0 | 95,0 | 95,0 |
| Silan mit 75 % S2 | 6,8 | 6,8 | 6,8 | 6,8 | 6,8 | 6,8 |
| TDAE | 45,0 | 45,0 | 45,0 | 45,0 | 45,0 | 45,0 |
| 6PPD | 3,0 | 3,0 | 3,0 | 3,0 | 3,0 | 3,0 |
| Wachs PE | 1,0 | 1,0 | 1,0 | 1,0 | 1,0 | 1,0 |
| Zinkoxid | 2,0 | 2,0 | 2,0 | 2,0 | 2,0 | 2,0 |
| Stearinsäure | 1,0 | 1,0 | 1,0 | 1,0 | 1,0 | 1,0 |
| Fettsäureester + Zinkseifen | - | - | 4,0 | 4,0 | - | - |
| Aminofettsäure[d] | - | - | - | - | 4,0 | 4,0 |
| DPG | 2,1 | 2,1 | 2,1 | 2,1 | 2,1 | 2,1 |
| CBS | 2,6 | 2,6 | 2,6 | 2,6 | 2,6 | 2,6 |
| löslicher Schwefel OT 1 | 2,1 | 2,1 | 2,1 | 2,1 | 2,1 | 2,1 |
| Summe | 266,7 | 266,7 | 270,7 | 270,7 | 270,7 | 270,7 |

[a] NS116R (Nippon Zeon)
[b] z.B.. NS616 (Nippon Zeon)
[c] Zeosil 1165 MP
[d] Struktol HT 254

**Tabelle 2**

|  | V1 | V2 | V3 | V4 | E1 | E2 |
|---|---|---|---|---|---|---|
| Gesamtoberfläche Silica [CTAB*pl (m$^2$)] | 14725 | 14725 | 14725 | 14725 | 14725 | 14725 |
| Grünfestigkeit subjective Bewertung (1 bis 5)* | 3 | 5 | 2 | 5 | 2 | 2 |
| Klebrigkeit subjective Bewertung (1 bis 5)** | 3 | 4 | 2 | 3 | 2 | 2 |
| Bound Rubber Extraktion phr | 51 | 58 | 48 | 55 | 50 | 62 |
| Relativer Wert (%) bezogen auf V1 | 100 | 114 | 94 | 108 | 98 | 121 |
| Vorhersage Abrieb Rating | 4 | 2 | 6 | 3 | 5 | 1 |
| Resilience 70'C (%) | 39 | 43 | 38 | 42 | 39 | 44 |
| Veränderung Rollwiderstand (%) bezogen auf V1 | 100 | 109 | 97 | 107 | 99 | 112 |

Die Bewertung erfolgt nach folgenden Kriterien:

*Grünfestigkeit:

Die Grünfestigkeit wurde über die Eigenschaften des ausgewalzten Mischungsfells nach der Kalanderwalze bewertet:

1: Glattes, kompaktes Mischungsfell mit fester und gerader Schnittkante

2: Raues, aber kompaktes Mischungsfell mit fester und gerader Schnittkante

3: Raues, aber kompaktes Mischungsfell mit ausgefransten Schnittkanten, die weiter einreißen und zum Teil durchreißen

4: Raues, brüchiges Mischungsfell mit stark ausgefransten Schnittkanten, die weiter einreißen und zum Teil durchreißen

5: Die Bildung eines Mischungsfells beim Auswalzen ist nicht möglich d.h. die Mischung ist nicht verarbeitbar

** Klebrigkeit

Die Klebrigkeit wurde über den Abzugswinkel des Mischungsfells an der Kalanderwalze bewertet:

1: Abzugswinkel <15°, d.h. kein kleben und leichtes ablösen von der Walze
2: Abzugswinkel zwischen 15 und 30°, d.h. leicht klebrig, aber einfach von der Walze abzuziehen
3: Abzugswinkel zwischen 30 und 45°, d.h. mäßig klebrig, nur mit höherem Aufwand von der Walze abzuziehen
4: Abzugswinkel zwischen 45 und 90°, d.h. stark klebrig, nur mit sehr hohem Aufwand bzw. mit Störungen von der Walze abzuziehen
5: Abzugswinkel größer 90°, d.h. extrem klebrig, nicht verarbeitbar

Die in den Beispielen eingesetzte funktionalisierte SSBR-Mischung ist eine Mischung mit einem polar reaktiven SSBR, der eine Hydroxyl- und/oder Epoxy-Funktionalisierung aufweist.
Die Mischungen zeigen weitestgehend gleiche Glasübergangstemperaturen auf.
Der Rebound (Rückprallelastizität) bei Raumtemperatur (RT) und 70°C wurde gemäß DIN 53512 bestimmt.
Aus den obigen Versuchen wird deutlich, dass erfindungsgemäß der Zielkonflikt zwischen guter Verarbeitbarkeit und gleichzeitiger Verbesserung des Rollwiderstands und des Abriebs gelöst werden kann.
Durch Einsatz eines hohen Anteils von funktionalisierten, bevorzugt polar oder polar reaktiv modifizierten SBRs wird der Bound Rubber Anteil deutlich erhöht und gleichzeitig der Dämpfungsbeitrag bei 70°C deutlich erniedrigt, d.h. das Abriebverhalten der Mischung verbessert sich und der Rollwiderstand lässt sich verringern. Mischungen mit herkömmlichen Prozessadditiven aus Fettsäureestern und Zinkseifen, V3 und V4, weisen zwar ein verbessertes Abriebverhalten und einen verbesserten Rollwiderstand auf, allerdings ist die Verarbeitbarkeit, ausgedrückt durch die Grünfestigkeit deutlich verschlechtert. Dadurch lassen sich entsprechende Mischungen nicht im Produktionsprozess verarbeiten.
Nur durch die erfindungsgemäße Zugabe der Aminosäurederivate als Prozessadditive lässt sich die Grünfestigkeit der Mischungen so deutlich verbessern, dass eine Verarbeitbarkeit im Herstellungsprozess gewährleistet ist.
Des Weiteren zeigt sich überraschenderweise, dass nur in der Kombination von funktionalisierten SBR mit der erfindungsgemäßen Zugabe des Prozessadditivs mit Wirkung als anionisches Tensid der Anteil Bound Rubber weiter erhöht wird, so dass neben der verbesserten Verarbeitbarkeit auch eine Verbesserung des Abriebwiderstandes möglich ist.

**Patentansprüche**

**1.** Vernetzbare Kautschukmischung, insbesondere für Reifen, enthaltend:

- 80 bis 100 phr funktionalisierten SSBR- und/oder ESBR-Dienkautschuk und/oder Hoch-Vinyl-BR-Kautschuk, wobei der Vinylgehalt im Hoch-Vinyl BR 40 bis 85 Gew.-% beträgt, wobei die Funktionalisierung eine Funktionalisierung mit Hydroxylgruppen und/oder Epoxidgruppen und/oder Siloxangruppen und/oder Aminogruppen und/oder Aminosiloxangruppen und/oder Carboxylgruppen und/oder Phthalocyanin ist,
- 0 bis 20 phr weiteren polaren oder unpolaren Kautschuk,
- zumindest eine Kieselsäure als polaren Füllstoff,
wobei N,N'-Diphenylguanidin als Beschleuniger eingesetzt wird, wobei das Verhältnis an Silika zu N,N'-Diphenylguanidin der Formel (phr Silika x BET Silika)/phr DPG > 4500 und < 7500 genügt, wobei BET gemäß DIN 66131 und 66132 ermittelt wurde und die minimale Gesamt-Silika-Oberfläche des polaren Füllstoffs dargestellt durch die folgende Formel: Silika-Füllstoff (phr) X CTAB-Silika-Oberfläche ($m^2$/g) > 10000 $m^2$ dargestellt ist,

wobei CTAB gemäß ASTM D3765 ermittelt wurde, und
- mindestens 0,1 phr Aminofettsäuren, Fettsäureamide oder Aminosäurederivate.

**2.** Kautschukmischung nach Anspruch 1, **dadurch gekennzeichnet, dass** im SSBR und/oder ESBR Styrol in einem Anteil von 10 bis 50 Gew.-% enthalten ist und/oder mit einem Vinylgehalt von 10 bis 80 Gew.-%, jeweils bezogen auf das gesamte Polymer.

**3.** Kautschukmischung nach zumindest einem der vorherigen Ansprüche, wobei die Kautschukmischung 0,1 bis 15 phr Aminofettsäuren, Fettsäureamide, oder Aminosäurederivate enthält.

**4.** Kautschukmischung nach zumindest einem der vorherigen Ansprüche, wobei die Aminofettsäure, Fettsäureamid, Fettsäureester, und/oder Aminosäurederivatkomponente metallfrei ist.

**5.** Kautschukmischung nach zumindest einem der vorherigen Ansprüche, wobei der weitere polare oder unpolare Kautschuk ausgewählt ist aus der Gruppe bestehend aus Naturkautschuk, synthetischem Polyisopren, Polybutadien, Propylen-Ethylen-Kautschuk, Ethylen-Propylen-Dien-Kautschuk, Halobutylkautschuk, Chloroprenkautschuk, Isopren-Butadien-Kautschuk und/oder Styrol-Isopren-Butadien-Terpolymer.

**6.** Kautschukmischung nach zumindest einem der vorhergehenden Ansprüche, wobei der polare Füllstoff in einer Menge von 0,1 phr bis 160 phr vorhanden ist.

**7.** Kautschukmischung nach zumindest einem der vorherigen Ansprüche, wobei diese weiterhin Russ in einer Menge von ≥ 0,1 phr enthält.

**8.** Kautschukmischung nach zumindest einem der vorherigen Ansprüche, wobei diese weiterhin flüssiges Polymer, bevorzugt flüssiges Polybutadien enthält.

**9.** Kautschukmischung nach zumindest einem der vorherigen Ansprüche, wobei diese weiterhin Weichmacher enthält.

**10.** Kautschukmischung nach zumindest einem der vorherigen Ansprüche, wobei diese weiterhin ein Silan-Kupplungsreagenz enthält.

**11.** Kautschukmischung nach zumindest einem der vorherigen Ansprüche, **dadurch gekennzeichnet, dass** sie

80 bis 100 phr funktionalisierten SSBR und/oder ESBR,
0 bis 20 phr mindestens eines weiteren polaren oder unpolaren Kautschuks,
1 bis 200 phr Kieselsäure,
0 bis 80 phr Ruß,
1 bis 160 phr Weichmacher,
0 bis 160 phr flüssige Polymere,
1 bis 30 phr Silan-Kupplungsagenz, und
mindestens 0,1 phr Aminofettsäuren, Fettsäureamide oder Aminosäurederivate enthält.

**12.** Laufstreifen enthaltend zumindest zum Teil eine vulkanisierte Kautschukmischung nach zumindest einem der Ansprüche 1 bis 11.

**13.** Reifen zumindest zum Teil aus einer vulkanisierten Kautschukmischung nach zumindest einem der Ansprüche 1 bis 11.

**14.** Gummiartikel zumindest teilweise hergestellt aus einer vulkanisierten Kautschukmischung nach zumindest einem der Ansprüche 1 bis 11.

**Claims**

**1.** Crosslinkable rubber mixture, in particular for tyres, comprising:

- 80 to 100 phr of functionalized SSBE diene rubber and/or ESBR diene rubber and/or high-vinyl BR rubber, where the vinyl content in the high-vinyl BR is 40 to 85% by weight, where the functionalization is a functionalization with hydroxy groups and/or epoxy groups and/or siloxane groups and/or amino groups and/or aminosiloxane groups and/or carboxy groups and/or phthalocyanine,

- 0 to 20 phr of other polar or nonpolar rubber,
- at least one silica as polar filler,

where N,N'-diphenylguanidine is used as accelerator, where the ratio of silica to N,N'-diphenylguanidine complies with the formula (phr silica x BET silica) /phr DPG > 4500 and < 7500, where BET has been determined in accordance with DIN 66131 and 66132, and the minimal total silica surface area of the polar filler is represented by the following formula: silica filler (phr) x CTAB silica surface area $(m^2/g) > 10,000\ m^2$, where CTAB has been determined in accordance with ASTM D3765, and

- at least 0.1 phr of amino fatty acids, fatty acid amides or amino acid derivatives.

2. Rubber mixture according to Claim 1, **characterized in that** in the SSBR and/or ESBR styrene is present in a proportion of 10 to 50% by weight and/or with a vinyl content of 10 to 80% by weight, based in each case on the entire polymer.

3. Rubber mixture according to at least one of the preceding claims, wherein the rubber mixture comprises 0.1 to 15 phr of amino fatty acids, fatty acid amides, or amino acid derivatives.

4. Rubber mixture according to at least one of the preceding claims, where the amino fatty acid, fatty acid amide, fatty acid ester, and/or amino acid derivative component is metal-free.

5. Rubber mixture according to at least one of the preceding claims, where the other polar or nonpolar rubber is selected from the group consisting of natural rubber, synthetic polyisoprene, polybutadiene, propylene-ethylene rubber, ethylenepropylene-diene rubber, halobutyl rubber, chloroprene rubber, isoprene-butadiene rubber and/or styrene-isoprene-butadiene terpolymer.

6. Rubber mixture according to at least one of the preceding claims, where the polar filler is present in a quantity of 0.1 phr to 160 phr.

7. Rubber mixture according to at least one of the preceding claims, where this moreover comprises carbon black in a quantity of ≥ 0.1 phr.

8. Rubber mixture according to at least one of the preceding claims, where this moreover comprises liquid polymer, preferably liquid polybutadiene.

9. Rubber mixture according to at least one of the preceding claims, where this moreover comprises plasticizer.

10. Rubber mixture according to at least one of the preceding claims, where this moreover comprises a silane coupling reagent.

11. Rubber mixture according to at least one of the preceding claims, **characterized in that** it comprises:

80 to 100 phr of functionalized SSBR and/or ESBR,
0 to 20 phr of at least one other polar or nonpolar rubber,
1 to 200 phr of silica,
0 to 80 phr of carbon black,
1 to 160 phr of plasticizer,
0 to 160 phr of liquid polymers,
1 to 30 phr of silane coupling agent, and
at least 0.1 phr of amino fatty acids, fatty acid amides or amino acid derivatives.

12. Tread comprising at least to some extent a vulcanized rubber mixture according to at least one of Claims 1 to 11.

13. Tyre at least to some extent made of a vulcanized rubber mixture according to at least one of Claims 1 to 11.

14. Vulcanized rubber item at lest to some extent produced from a vulcanized rubber mixture according to at least one of claims 1 to 11.

**Revendications**

1. Mélange de caoutchouc réticulable, notamment pour pneus, contenant :

- 80 à 100 pce de caoutchouc diénique SSBR et/ou ESBR fonctionnalisé et/ou de caoutchouc BR à haute teneur en vinyle, la teneur en vinyle dans le BR à haute teneur en vinyle étant de 40 à 85 % en poids, la fonctionnalisation étant une fonctionnalisation avec des groupes hydroxyle et/ou des groupes époxyde et/ou des groupes siloxane et/ou des groupes amino et/ou des groupes aminosiloxane et/ou des groupes carboxyle et/ou de la phtalocyanine,
- 0 à 20 pce de caoutchouc polaire ou apolaire supplémentaire,
- au moins un acide silicique en tant que charge polaire,
de la N,N'-diphénylguanidine étant utilisée en tant qu'accélérateur, le rapport de silice à N,N'-diphénylguanidine satisfaisant la formule (pce silice x BET silice) /pce DPG > 4 500 et < 7 500, la BET ayant été déterminée selon DIN 66131 et 66132, et la surface de silice totale minimale de la charge polaire étant représentée par la formule suivante : charge de silice (pce) X surface de silice CTAB ($m^2/g$) > 10 000 $m^2$, la CTAB ayant été déterminée selon ASTM D3765, et
- au moins 0,1 pce d'acides gras aminés, d'amides d'acides gras ou de dérivés d'acides aminés.

2. Mélange de caoutchouc selon la revendication 1, **caractérisé en ce que** du styrène est contenu dans le SSBR et/ou l'ESBR en une proportion de 10 à 50 % en poids et/ou avec une teneur en vinyle de 10 à 80 % en poids, à chaque fois par rapport au polymère total.

3. Mélange de caoutchouc selon au moins l'une quelconque des revendications précédentes, le mélange de caoutchouc contenant 0,1 à 15 pce d'acides gras aminés, d'amides d'acides gras ou de dérivés d'acides aminés.

4. Mélange de caoutchouc selon au moins l'une quelconque des revendications précédentes, l'acide gras aminé, l'amide d'acide gras, l'ester d'acide gras et/ou le composant dérivé d'acide aminé étant exempt de métal.

5. Mélange de caoutchouc selon au moins l'une quelconque des revendications précédentes, le caoutchouc polaire ou apolaire supplémentaire étant choisi dans le groupe constitué par le caoutchouc naturel, le polyisoprène synthétique, le polybutadiène, le caoutchouc de propylène-éthylène, le caoutchouc d'éthylène-propylène-diène, le caoutchouc d'halobutyle, le caoutchouc de chloroprène, le caoutchouc d'isoprène-butadiène et/ou le terpolymère de styrène-isoprène-butadiène.

6. Mélange de caoutchouc selon au moins l'une quelconque des revendications précédentes, la charge polaire étant présente en une quantité de 0,1 pce à 160 pce.

7. Mélange de caoutchouc selon au moins l'une quelconque des revendications précédentes, celui-ci contenant en outre du noir de carbone en une quantité ≥ 0,1 pce.

8. Mélange de caoutchouc selon au moins l'une quelconque des revendications précédentes, celui-ci contenant en outre un polymère liquide, de préférence du polybutadiène liquide.

9. Mélange de caoutchouc selon au moins l'une quelconque des revendications précédentes, celui-ci contenant en outre des plastifiants.

10. Mélange de caoutchouc selon au moins l'une quelconque des revendications précédentes, celui-ci contenant en outre un réactif de couplage silane.

11. Mélange de caoutchouc selon au moins l'une quelconque des revendications précédentes, **caractérisé en ce que** celui-ci contient :

80 à 100 pce de SSBR et/ou ESBR fonctionnalisé,
0 à 20 pce d'au moins un caoutchouc polaire ou apolaire supplémentaire,
1 à 200 pce d'acide silicique,
0 à 80 pce de noir de carbone,
1 à 160 pce de plastifiants,
0 à 160 pce de polymères liquides,

1 à 30 pce d'agent de couplage silane, et

au moins 0,1 pce d'acides gras aminés, d'amides d'acides gras ou de dérivés d'acides aminés.

12. Bande de roulement contenant au moins en partie un mélange de caoutchouc vulcanisé selon au moins l'une quelconque des revendications 1 à 11.

13. Pneu au moins en partie à base d'un mélange de caoutchouc vulcanisé selon au moins l'une quelconque des revendications 1 à 11.

14. Article en gomme fabriqué au moins partiellement à base d'un mélange de caoutchouc vulcanisé selon au moins l'une quelconque des revendications 1 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2002177641 A
- EP 763564 A
- EP 1270657 A
- WO 9909036 A

### In der Beschreibung aufgeführte Nicht-Patentliteratur

- **J. SCHNETGER.** Lexikon der Kautschuktechnik. Hüthig Buch Verlag, 1991, 42-48